# EUROPÄISCHE PATENTSCHRIFT

(11) **EP 1 864 782 B1**
(45) Veröffentlichungstag und Bekanntmachung des Hinweises auf die Patenterteilung: **10.03.2010**
(21) Anmeldenummer: 07010739.6
(22) Anmeldetag: 31.05.2007
(51) Int. Cl.: B29C 49/20, B29C 51/12, B29C 69/00, B29C 49/04, B29L 31/30

(54) **Verfahren zur Herstellung von Hohlkörpern aus Kunststoff mit Einlageteilen an der Innen- bzw. Aussenseite**
Method for manufacturing hollow bodies made of thermoplastic material having inserts on the inside and /or outside
Procédé de fabrication de corps creux en matière synthétique thermoplastique avec des pièces d'insertion situeés à l'intérieur et /ou l'extérieur

(30) Priorität: 09.06.2006 DE 102006027255
(43) Veröffentlichungstag der Anmeldung: 12.12.2007
(73) Patentinhaber: Kautex Textron GmbH & Co. KG., 53229 Bonn (DE)
(72) Erfinder: Bienhüls, Deniz, 53578 Windhagen (DE); Eulitz, Dirk, 53113 Bonn (DE); Borchert, Matthias, 53179 Bonn (DE); Krämer, Timo, 57635 Hirz-Maulsbach (DE); Lorenz, Harald, 53474 Bad Neuenahr-Ahrweiler (DE); Mehren, Christoph, 53639 Königswinter (DE); Löwer, Robert, 53359 Rheinbach (DE); Wolter, Gerd, 53639 Königswinter (DE)
(74) Vertreter: Polypatent

(56) Entgegenhaltungen:
- EP-A- 0 595 158
- EP-A- 1 334 817
- JP-A- 11 188 781
- JP-A- 2006 015 744

## Beschreibung

Die Erfindung betrifft ein Verfahren zur Herstellung von Hohlkörpern aus thermoplastischem Kunststoff durch Extrusionsblasformen.

Beim Extrusionsblasformen von Kunststofferzeugnissen werden üblicherweise Formwerkzeuge verwendet, die zwei Formhälften umfassen, welche komplementär zueinander ausgebildet sind und gemeinsam ein Formnest begrenzen. Ein thermoplastisches Extrudat, meistens in Form eines Schlauchs, wird zwischen die geöffneten Hälften des Werkzeugs gebracht. Das Werkzeug schließt sich um den Vorformling, dieser wird innerhalb des Werkzeugs an die Innenwandung der von dem Werkzeug gebildeten Kavität angelegt, sodass der fertige Artikel eine äußere Gestalt aufweist, die der inneren Kontur des Formwerkzeugs entspricht. Die Umformung des Vorformlings innerhalb der Kavität des Werkzeugs erfolgt entweder durch Aufweitung des Vorformlings mittels Gasdruck oder Anlegen des Vorformlings an die Innenwandung des Werkzeugs mittels Unterdruck, der über Kanäle in der Forminnenwandung aufgebracht wird.

Ebenso ist es bekannt, bahnförmige oder bänderförmige Extrudate oberhalb eines geöffneten Werkzeugs fortlaufend in dieses zu extrudieren oder diese mittels eines Manipulators in noch plastischem Zustand von einem Extruder abzunehmen und zwischen die geöffneten Teile des Werkzeugs einzuführen.

Aufgrund der Formgebung durch Aufweitung mittels innerem Überdruck oder Anlegen des Vorformling mittels Vakuum an die Forminnenwandung ist das Extrusionsblasformverfahren grundsätzlich nicht zur Herstellung solcher Teile geeignet, die nur geringe Wandstärkentoleranzen aufweisen dürfen. Auch sind Teile mit starken Hinterschneidungen schwer herstellbar. Deshalb werden bei manchen Hohlkörpern Teile wie beispielsweise Gewinde, Haltegriffe oder dergleichen als separate Bauteile gefertigt und beim Ausformen des Hohlkörpers innerhalb der Form an diesen angeformt. Solche Teile werden im Allgemeinen als Einlegeteile bezeichnet. Auch ist es bekannt, Etiketten in Form von Einlegeteilen bereitzustellen (In-Mold-Labeling). Zu diesem Zweck wird das Einlegeteil mittels eines Manipulators vor Einbringen des Vorformlings in der Form platziert.

Sind Bauteile innerhalb des fertigenden Erzeugnisses zu platzieren, so wird das betreffende Teil ebenfalls mittels eines Manipulators oder Halters so zwischen den geöffneten Formhälften platziert, dass das zumeist schlauchförmige Extrudat das zu umblasende Bauteil umgibt. Die Form bzw. das Werkzeug schließt sich dann um den Schlauch und um das von diesem aufgenommene Bauteil. Die Verwendung von Manipulatoren ist hinsichtlich ihrer Integration in den Fertigungszyklus eher störend.

Aus der EP 1 334 817 A1 ist, gemäß dem Oberbegriff des Anspruch 1, ein Verfahren zur Herstellung von schalenförmigen Formteilen oder Hohlkörpern aus thermoplastischem Kunststoff bekannt, umfassend die Herstellung eines mindestens annähernd schlauchförmigen Vorformlings durch Extrusion von thermoplastischem Material, die axiale Aufteilung des Vorformlings zu wenigstens einer einlagigen Materialbahn, wobei die Materialbahn in einem Formwerkzeug in der ersten Hitze die Endform erhält. Bei diesem Verfahren ist vorgesehen, dass die Materialbahn mittels eines Manipulators ergriffen und von dem Extrusionskopf abgenommen wird, wobei diese mittels des Manipulators quer zur Extrusionsrichtung ausgebreitet und/oder gestreckt wird und die Materialbahn von dem Manipulator dem Formwerkzeug aufgegeben wird. Das Formwerkzeug besteht aus drei Teilen, nämlich zwei äußeren Kavitätenformteilen mit jeweils einer Kavität und einem zentral angeordneten Deckelformteil, das jeweils auf seinen den Kavitäten zugewandten Seiten mit einem der Kavität entsprechenden Konturverlauf versehen ist.

Aus der EP 0 595 158 A1 sind ein Verfahren und eine Vorrichtung zum Herstellen von Hohlkörpern aus thermoplastischem Kunststoff im Blasverfahren bekannt, die mit einem Zusatzteil zu versehen sind, welches in die Blasform eingelegt und beim Aufweiten eines Vorformlings zum Hohlkörper mit Letzterem verbunden wird.

Der Erfindung liegt daher die Aufgabe zugrunde, ein neues Verfahren zur Herstellung extrusionsblasgeformter Erzeugnisse bereitzustellen, bei dem insbesondere das Einbringen von Einlegeteilen verhältnismäßig einfach in das Verfahren integriert ist.

Die Aufgabe wird gelöst durch ein Verfahren zur Herstellung von Hohlkörpern aus themnoplastischem Kunststoff, bei welchem bahn- oder bänderförmige Vorformlinge aus plastifiziertem Kunststoff in einem mehrteiligen, ein Formnest bildenden Werkzeug mit zwei Außenformen und wenigstens einer Mittelform, die zueinander eine Öffnungs- und Schließbewegung vollziehen, umgeformt werden, wobei die Mittelform mit wenigstens einem Bauteilhalter versehen ist, der aus der von der Mittelform definierten Werkzeugebene ein- und ausfahrbar ist, wobei der Bauteilhalter in einem ersten Schritt mit wenigstens einem Einlegeteil bestückt wird, sodann das Einlegeteil mittels des Bauteilhalters an der Innenwandung einer Außenform platziert wird und wobei in einem weiteren Schritt die Einbringung und Umformung der Vorformlinge innerhalb des Werkzeugs zweistufig erfolgt, wobei die Vorformlinge jeweils gegen eine einen Teil des Formnests bildende Kontur mittels Überdruck und/oder Unterdruck angelegt und ausgeformt werden und sodann die jeweils Teile des Hohlkörpers bildenden Zwischenerzeugnisse miteinander zu einem fertigen Erzeugnis verbunden werden.

Die Erfindung kann dahingehend zusammengefasst werden, dass bei der Herstellung eines extrusionsblasgeformten Erzeugnisses mittels eines dreiteiligen Werkzeugs mit Mittelform, die Mittelform anstelle eines ansonsten erforderlichen Manipulators zur Platzierung eines oder mehrerer Einlegeteile in der Form verwendet wird.

Das erfindungsgemäße Verfahren ist so zu verstehen, dass die Extrusion der Vorformlinge beispielsweise mittels Breitschlitzdüsen hängend und kontinuierlich erfolgen kann, wobei das Werkzeug umfassend drei oder mehr Formteile bezüglich der ortsfest angeordneten Extrusionsköpfe verfahrbar sein kann. Alternativ hierzu können die Vorformlinge mittels einer oder mehrerer Greifer am Extrusionskopf abgenommen werden und zwischen die geöffneten oder sich öffnenden Teile der Blasform gebracht werden.

Zweckmäßigerweise werden die Vorformlinge gegen bzw. um das an der Innenwandung einer Außenform angeordnete Einlegeteil ausgeformt. Im Folgenden ist jeweils immer nur von einem Einlegeteil die Rede, die Erfindung ist selbstverständlich so zu verstehen, dass mittels einer beliebigen Anzahl von Bauteilhaltern eine beliebige Anzahl von Einlegeteilen in der betreffenden Form platziert werden kann.

Zweckmäßigerweise erfolgt die Umformung der Vorformlinge in der ersten Hitze, d. h. ohne weitere Plastifizierung durch erneute Wärmeeinwirkung. Mit anderen Worten, der Vorformling hat bei der Umformung in etwa die Temperatur, die das Extrudat bei Austritt aus dem Extrusionskopf hat.

Das Verfahren umfasst das Verfahren der Mittelform quer zur Öffnungs- und Schließbewegung des Werkzeugs bzw. der Außenform bezüglich der Mittelform. Die Öffnungs- und Schließbewegung des Werkzeugs erfolgt in der Regel horizontal, bezogen auf die Ausstellebene der Einrichtung, die Öffnungs- und Schließbewegung des Werkzeugs kann allerdings auch auf einer schiefen Ebene erfolgen.

Bei einer bevorzugten Variante der Erfindung umfasst ein Bewegungszyklus des Werkzeugs wenigstens die Schritte Ausfahren der Mittelform zwischen den Außenformen zwecks Bestücken des Bauteilhalters, Einfahren der Mittelform, Schließen der Außenform gegen die Mittelform, Öffnen der Außenformen, Ausfahren der Mittelform, Schließen der Außenformen gegeneinander sowie Öffnen der Außenformen zwecks Entnahme des Erzeugnisses.

Falls das fertige Erzeugnis auch Einbauteile umfassen soll, ist es besonders zweckmäßig, nach dem Einbringen des Einlegeteils eine weitere Bestückung des Bauteilhalters oder eines weiteren Bauteilhalters an der Mittelform mit wenigstens einem innerhalb des Erzeugnis zu platzierenden Einbauteils vorzunehmen, wobei die Platzierung dieses Einbauteils nach dem Anlegen der Vorformlinge an die Kontur des Formnestes erfolgt.

So kann in vorteilhafter Weise eine vielfache Verwendung der Mittelform bzw. in dieser verfahrbarer Bauteilhalter vollständig mehrere ansonsten erforderliche Manipulatoren ersetzen. Solche Manipulatoren benötigen viel Aufstellplatz, darüber hinaus werden diese bezüglich der erforderlichen Verfahrbewegung des Werkzeugs als störend empfunden.

Sofern die Mittelform und die an dieser bzw. in dieser angeordneten Bauteilhalter sowohl zur Platzierung von Einlegeteilen als auch zur Platzierung von Einbauteilen verwendet werden soll, kann beispielsweise vorgesehen sein, dass der Bewegungszyklus des Werkzeugs weiterhin die Schritte erneutes Ausffahren der Mittelform nach Platzierung des Einlegeteils zwecks Bestückung eines Bauteilhalters mit einem Einbauteil und erneutes Einfahren der Mittelform zwischen die Außenformen umfasst. Alternativ kann vorgesehen sein, dass in einem ersten Verfahrensschritt mehrere Bauteilhalter mit wenigstens einem in die Form einzubringenden Einlegeteil mit wenigstens einem in das Erzeugnis einzubringende Einbauteil bestückt werden, wobei das Einlegeteil vor Einbringung der Vorformlinge und das Einbauteil nach Anlegen der Vorformlinge an die Formwandung platziert werden.

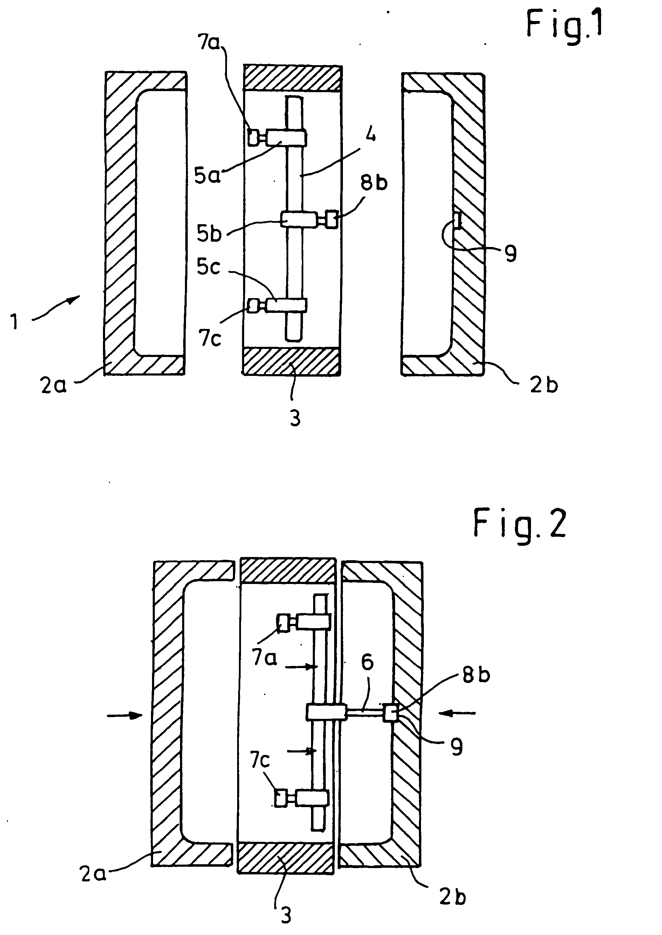

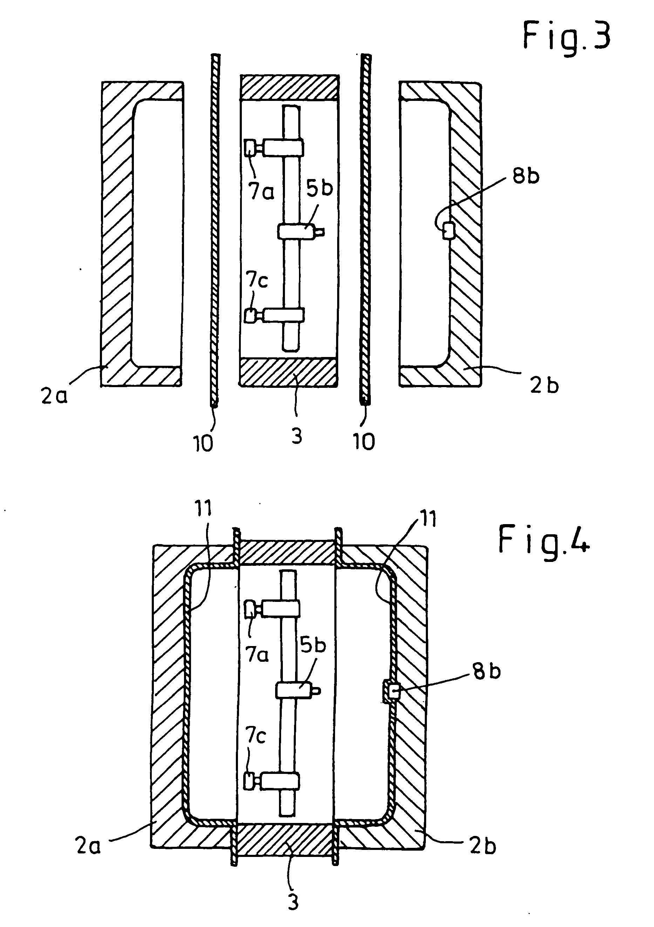

Das Verfahren gemäß der Erfindung wird nachstehend anhand eines in den Figuren dargestellten Ausführungsbeispiels erläutert, wobei die beigefügten Figuren 1 bis 8 schematisch einen Bewegungszyklus des Werkzeugs veranschaulichen, bei welchem sowohl ein Einlegeteil in die Form eingebracht wird als auch zwei Einbauteile in dem fertigen Erzeugnis platziert werden.

In den Figuren ist das mit 1 bezeichnete Werkzeug im Querschnitt dargestellt, wobei dieses dreiteilig ausgebildet ist und zwei Außenformen 2a, 2b sowie eine Mittelform 3 umfasst. Die Außenformen 2a, 2b sind voneinander weg und aufeinander zu im Sinne einer Öffnungs- und Schließbewegung verstellbar, die Mittelform 3 ist bezüglich der Außenformen 2a, 2b quer zur Öffnungs- und Schließbewegung der Außenformen verfahrbar. Die Formen sind in bekannter Art und Weise jeweils an bekannten und der Einfachheit halber nicht dargestellten Formaufspannplatten befestigt, letztere sind verschiebbar bzw. verfahrbar in einem ebenfalls nicht dargestellten Schließgestell angeordnet. Eine Extrusionseinrichtung zur Erzeugung von bahnförmigen oder bänderförmigen Vorformlingen 4 ist ebenfalls aus Vereinfachungsgründen nicht dargestellt. Beispielsweise können unter Bezugnahme auf Figur 1 zwei geeignete Extrusionsköpfe mit Breitschlitzdüsen oberhalb des Werkzeugs 1 auf der dem Betrachter zugewandten Seite außerhalb der Zeichnungsebene angeordnet sein.

Innerhalb der Mittelform 3 ist ein verfahrbarer Träger 4 angeordnet, der jeweils in Richtung auf die eine oder andere Außenform 2a, 2b verschiebbar ist. Auf dem Träger 4 sind jeweils verstellbare Bauteilhalter 5a, 5b, 5c angeordnet, die über pneumatische Zylinder 6 bzgl. des Trägers 4 verstellbar sind. In Figur 1 ist das Werkzeug in eine Phase des Bewegungszyklus dargestellt, bei welchem die Bauteilhalter 5a, 5c jeweils mit einem Einbauteil 7a, 7c bestückt sind, der Bauteilhalter 5b mit einem Einlegeteil 8b.

Dem vorausgegangen ist die Bestückung der Bauteilhalter 5a, 5b, 5c, wobei zu diesem Zweck die Mittelform 3 quer zu den Außenformen 2a, 2b verfahren wurde. Diese Position der Mittelform 3 ist in den Zeichnungen nicht dargestellt.

Nachdem die Mittelform 3 wieder in die in Figur 1 gezeigte Lage verfahren wurde, werden die Außenformen 2a, 2b aufeinander zu bewegt, wie dies in Figur 2 dargestellt ist. Die Außenformen 2a, 2b müssen dabei nicht notwendigerweise ganz geschlossen werden. Der Träger 4 wird in Richtung der in Figur 2 gezeigten Pfeile auf die Außenform 2b bewegt, sodann wird der Zylinder 6 des Bauteilhalters 5b in Richtung auf die Außenform 2b ausgefahren, das Einlegeteil 8b wird in einer hierfür vorgesehen Ausnehmung 9 der Innenwandung der Außenform 2b platziert. Sodann werden der Träger 4 und der Bauteilhalter 5b wieder in ihre Ausgangslage zurückgefahren. Die Außenformen 2a, 2b werden geöffnet (Figur 3) und die mit 10 bezeichneten bahnförmigen Vorformlinge aus plastifiziertem thermoplastischem Material werden jeweils zwischen die Außenformen 2a, 2b und die Mittelform 3 platziert bzw. abgehängt.

Sodann werden die Außenformen 2a, 2b jeweils gegen die Mittelform 3 geschlossen und die Vorformlinge 10 mittels innerem Überdruck, beispielsweise durch Einbringen von Blasluft, an die Innenkontur der Außenformen 2a, 2b angelegt bzw. ausgeformt, wobei ein Vorformling 10 das an der Innenkontur der Außenform 2b platzierte Einlegeteil 8b umfließt und sich mit diesem verbindet.

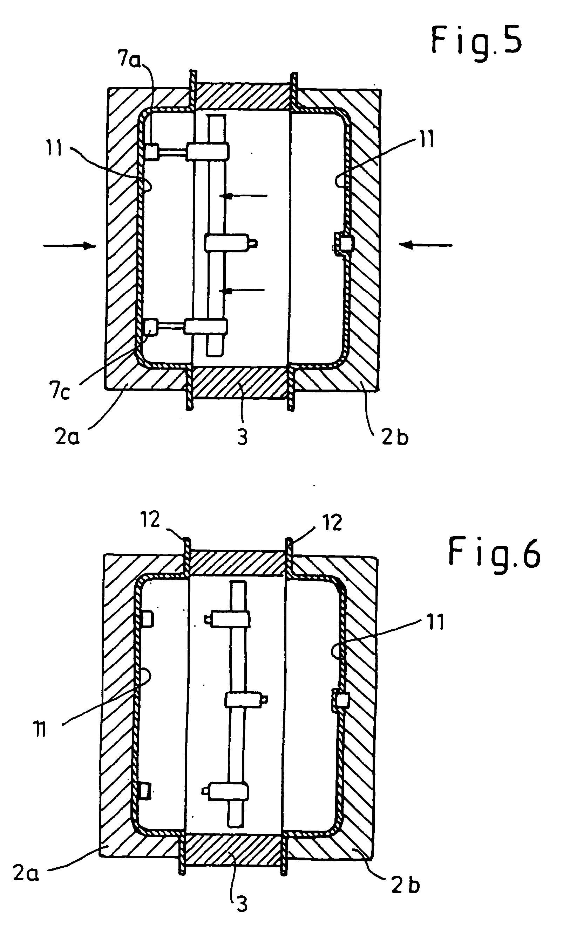

In einem weiteren Verfahrensschritt (Figur 5) werden der Träger 4 und die Zylinder 6 der Bauteilhalter 5a und 5c in Richtung auf die Innenkontur der Außenformen 2a ausgefahren, die Bauteile 7a, 7c werden über die Bauteilhalter 5a, 5c gegen die Innenwandung des bereits ausgeformten Vorformlings 10 gedrückt. Die Einbauteile 7a, 7c verbleiben an der Innenwandung der Zwischenerzeugnisse 11, wenn sich, wie dies in Figur 6 gezeigt ist, der Träger 4 und die Bauteilhalter 5a, 5b in die Ausgangslage zurückbewegen.

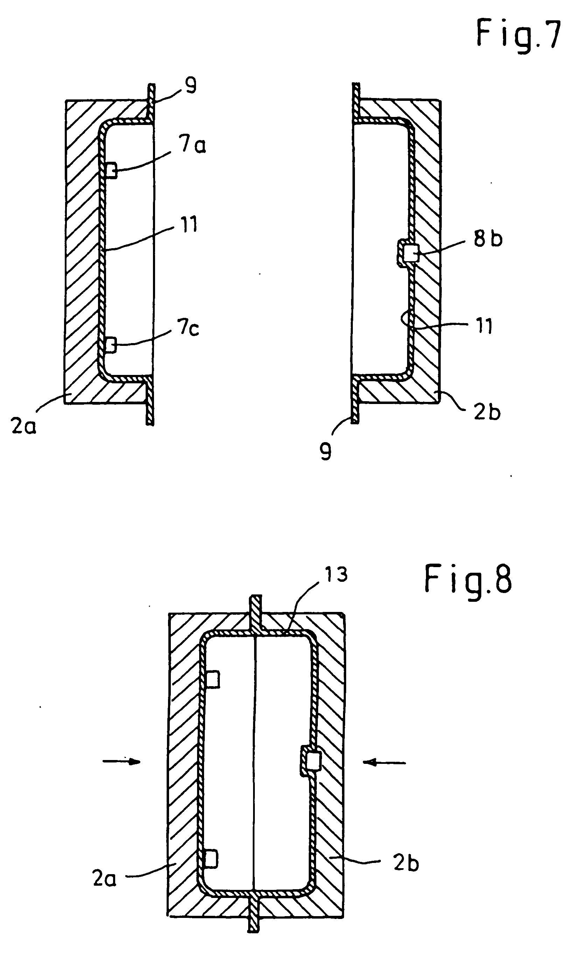

Sodann werden die Außenformen 2a, 2b geöffnet und die Mittelform 3 wird zwischen den Außenformen 2a, 2b weggefahren (Figur 7).

In einem weiteren Schritt werden die Außenformen 2a, 2b gegeneinander geschlossen, sodass die Zwischenerzeugnisse 11, die zwei Halbschalen bilden, an ihren flanschartigen Rändern 12 miteinander zu einem Hohlkörper verschweißt werden.

In einem weiteren nicht dargestellten Verfahrensschritt werden die Außenformen 2a, 2b voneinander wegbewegt, d. h. geöffnet, und das fertige Erzeugnis 13 wird aus dem Werkzeug 1 entnommen. Zeitgleich mit der Verbindung der Zwischenerzeugnisse 11 zu dem fertigen Erzeugnis 13 kann die Bestückung der Bauteilhalter 5a, 5b, 5c erfolgen. Ebenfalls nicht dargestellt ist das Verfahren der Mittelform mit dem bestückten Bauteilhaltern 5a, 5b, 5c in die in Figur 1 gezeigt Lage.

Wie dies eingangs bereits beschrieben wurde, können die Bauteilhalter 5a, 5b, 5c in zwei hintereinander folgenden Bewegungsabschnitten der Mittelform 3 bestückt werden. Bei dem beschriebenen Ausführungsbeispiel ist ein solcher Zwischenschritt nicht vorgesehen.

### Bezugszeichenliste

- 1: Werkzeug
- 2a, 2b: Außenformen
- 3: Mittelform
- 4: Träger
- 5a, 5b, 5c: Bauteilhalter
- 6: Zylinder
- 7a, 7c: Einbauteile
- 8b: Einlegeteil
- 9: Ausnehmung
- 10: Vorformlinge
- 11: Zwischenerzeugnisse
- 12: Ränder
- 13: Erzeugnis

## Patentansprüche

1. Verfahren zur Herstellung von Hohlkörpern aus thermoplastischem Kunststoff, bei welchem bahn- oder bänderförmige Vorformlinge (10) aus plastifiziertem Kunststoff in einem mehrteiligen, ein Formnest bildenden Werkzeug (1) mit zwei Außenformen (2a, 2b) und wenigstens einer Mittelform (3) die zueinander eine Öffnungs- und Schließbewegung vollziehen, umgeformt werden, **dadurch gekennzeichnet, dass** die Mittelform (3) mit wenigstens einem Bauteilhalter (5a, 5b, 5c) versehen ist, der aus der von der Mittelform (3) definierten Werkzeugebene ein- und ausfahrbar ist, wobei der Bauteilhalter (5a, 5b, 5c) in einem ersten Schritt mit wenigstens einem Einlegeteil (8b) bestückt wird, sodann das Einlegeteil (8b) mittels des Bauteilhalters (5a, 5b, 5c) an der Innenwandung einer Außenform (2a, 2b) platziert wird und wobei in einem zweiten Schritt die Einbringung und Umformung der Vorformlinge (10) innerhalb des Werkzeugs (1) zweistufig erfolgt, wobei zunächst die Vorformlinge (10) jeweils gegen eine einen Teil des Formnests bildende Kontur mittels Überdruck und/oder Unterdruck angelegt und ausgeformt werden und sodann die jeweils Teile des Hohlkörpers bildenden Zwischenerzeugnisse (11) miteinander zu einem fertigen Erzeugnis (13) verbunden werden.

2. Verfahren nach Anspruch 1, **dadurch gekennzeichnet, dass** die Vorformlinge (10) gegen bzw. um das an der Innenwandung einer Außenform angeordneten Einlegeteil (8b) ausgeformt werden.

3. Verfahren nach Anspruch 1 oder 2, **dadurch gekennzeichnet, dass** die Umformung der Vorformlinge (10) in der ersten Hitze erfolgt.

4. Verfahren nach einem der Ansprüche 1 bis 3, **dadurch gekennzeichnet, dass** die Mittelform (3) quer zur Öffnungs- und Schließbewegung des Werkzeugs (1) bezüglich der Außenformen (2a, 2b) verfahren wird.

5. Verfahren nach einem der Ansprüche 1 bis 4, **dadurch gekennzeichnet, dass** ein Bewegungszyklus des Werkzeugs (1) wenigstens die Schritte Verfahren der Mittelfom (3) zwischen den Außenformen (2a, 2b) zwecks Bestücken des Bauteilhalters (5a, 5b, 5c), Einfahren der Mittelform (3), Schließen der Außenformen (2a,2b) gegen die Mittelform (3), Offnen de Außenformen (2a, 2b), Ausfahren der Mittelform (3), Schließen der Außenformen (2a, 2b) gegeneinander sowie Öffnen der Außenformen (2a, 2b) zwecks Entnahme des Erzeugnisses (13) umfasst.

6. Verfahren nach einem der Ansprüche 1 bis 5, **dadurch gekennzeichnet, dass** nach dem Einbringen des Einlegeteils (8b) eine weitere Bestückung des Bauteilhalters (5a, 5b, 5c) oder eines weiteren Bauteilhalters (5a, 5b, 5c) an der Mittelform (3) mit wenigstens einem innerhalb des Erzeugnisses (13) zu platzierenden Einbauteil (7a, 7c) erfolgt, wobei die Platzierung dieses Einbauteils (7a, 7c) nach dem Anlegen der Vorformlinge (10) an die Kontur des Formnestes erfolgt.

7. Verfahren nach einem der Ansprüche 5 oder 6, **dadurch gekennzeichnet, dass** der Bewegungszyklus des Werkzeuges (1) weiterhin die Schritte erneutes Ausfahren der Mittelform (3) nach Platzierung des Einlegeteils (8b) zwecks Bestückung eines Bauteilhalters (5a, 5b, 5c) mit einem Einbauteil (7a, 7c) und erneutes Einfahren der Mittelform (3) zwischen die Außenformen (2a, 2b) umfasst.

8. Verfahren nach einem der Ansprüche 1 bis 5, **dadurch gekennzeichnet, dass** in einem ersten Verfahrensschritt mehrere Bauteilhalter (5a, 5b, 5c) mit wenigstens einem in die Form einzubringenden Einlegeteil (8b) und mit wenigstens einem in das Erzeugnis (13) einzubringenden Einbauteil (7a, 7b) bestückt werden, wobei das Einlegeteil (8b) vor Einbringen der Vorformlinge (10) und das Einbauteil (7a, 7c) nach Anlegen der Vorformlinge (10) an die Formwandung platziert werden.

## Claims

1. Method for producing hollow members from thermoplastic plastics material, in which web or strip-like preforms (10) which are of plasticised plastics material are shaped in a multi-component tool (1) which forms a mould cavity and which has two outer moulds (2a, 2b) and at least one central mould (3) which carry out an opening and closing movement with respect to each other, **characterised in that** the central mould (3) is provided with at least one component holder (5a, 5b, 5c) which can be moved in and out of the tool plane defined by the central mould (3), the component holder (5a, 5b, 5c) being provided in a first step with at least one insertion component (8b), then the insertion component (8b) being positioned by means of the component holder (5a, 5b, 5c) on the inner wall of an outer mould (2a, 2b) and the introduction and the shaping of the preforms (10) inside the tool (1) being carried out in two stages in a second step, the preforms (10) first being positioned and shaped against a contour which forms a portion of the mould cavity by means of excess pressure and/or reduced pressure and then the intermediate products (11) which each form components of the hollow member being connected to each other to form a finished product (13).

2. Method according to claim 1, **characterised in that** the preforms (10) are shaped against or around the insertion component (8b) which is arranged on the inner wall of an outer mould.

3. Method according to claim 1 or claim 2, **characterised in that** the shaping of the preforms (10) is carried out in the first heat.

4. Method according to any one of claims 1 to 3, **characterised in that** the central mould (3) is moved transversely relative to the opening and closing movement of the tool (1) with respect to the outer moulds (2a, 2b).

5. Method according to any one of claims 1 to 4, **characterised in that** a movement cycle of the tool (1) comprises at least the steps of moving the central mould (3) between the outer moulds (2a, 2b) in order to equip the component holder (5a, 5b, 5c), introducing the central mould (3), closing the outer moulds (2a, 2b) against the central mould (3), opening the outer moulds (2a, 2b), extracting the central mould (3), closing the outer moulds (2a, 2b) against each other and opening the outer moulds (2a, 2b) in order to remove the product (13).

6. Method according to any one of claims 1 to 5, **characterised in that**, after the insertion component (8b) has been introduced, the component holder (5a, 5b, 5c) or another component holder (5a, 5b, 5c) on the central mould (3) is provided with at least one integral component (7a, 7c) which is intended to be placed inside the product (13), the placement of this integral component (7a, 7c) being carried out after the preforms (10) have been positioned on the contour of the mould cavity.

7. Method according to either claim 5 or claim 6, **characterised in that** the movement cycle of the tool (1) further comprises the steps of again extracting the central mould (3) after the insertion component (8b) has been positioned in order to provide a component holder (5a, 5b, 5c) with an integral component (7a, 7c) and again introducing the central mould (3) between the outer moulds (2a, 2b).

8. Method according to any one of claims 1 to 5, **characterised in that**, in a first method step, a plurality of component holders (5a, 5b, 5c) are provided with at least one insertion component (8b) which is intended to be introduced into the mould and at least one integral component (7a, 7b) which is intended to be introduced into the product (13), the insertion component (8b) being placed on the mould wall before the preforms (10) are introduced and the integral component (7a, 7b) being placed on the mould wall after the preforms (10) have been positioned.

## Revendications

1. Procédé pour fabriquer des corps creux à base de matière plastique thermoplastique, dans lequel des ébauches (10) en forme de bande ou de ruban à base de matière plastique plastifiée sont façonnées dans un outil (1) en plusieurs parties, formant une cavité de moulage avec deux moules extérieurs (2a, 2b) et au moins un moule central (3), qui effectuent un mouvement d'ouverture et de fermeture les uns par rapport aux autres, **caractérisé en ce que** le moule central (3) est doté d'au moins un support de composant (5a, 5b, 5c), lequel peut être entré et sorti à partir du plan d'outil défini par le moule central (3), le support de composant (5a, 5b, 5c) étant équipé en une première étape d'au moins une pièce d'insertion (8b), la pièce d'insertion (8b) étant placée ensuite au moyen du support de composant (5a, 5b, 5c) sur la paroi interne d'un moule extérieur (2a, 2b) et l'introduction et le façonnage des ébauches (10) s'effectuant en une seconde étape à l'intérieur de l'outil (1) sur deux niveaux, les ébauches (10) étant appliquées d'abord contre un contour formant une partie de la cavité de moulage au moyen de surpression et/ou de dépression et étant démoulées et les produits intermédiaires (11) formant à chaque fois des parties du corps creux étant reliés ensuite les uns avec les autres pour former un produit (13) fini.

2. Procédé selon la revendication 1, **caractérisé en ce que** les ébauches (10) sont démoulées contre ou autour de la partie d'insertion (8b) disposée sur la paroi intérieure d'un moule extérieur.

3. Procédé selon la revendication 1 ou 2, **caractérisé en ce que** le façonnage des ébauches (10) s'effectue dans la première chaleur.

4. Procédé selon l'une quelconque des revendications 1 à 3, **caractérisé en ce que** le moule central (3) est déplacé transversalement au mouvement d'ouverture et de fermeture de l'outil (1) par rapport aux moules extérieurs (2a, 2b).

5. Procédé selon l'une quelconque des revendications 1 à 4, **caractérisé en ce qu'**un cycle de mouvement de l'outil (1) comporte au moins les étapes de déplacement du moule central (3) entre les moules extérieurs (2a, 2b) pour l'équipement du support de composant (5a, 5b, 5c), d'introduction du moule central (3), de fermeture des moules extérieurs (2a, 2b) contre le moule central (3), d'ouverture des moules extérieurs (2a, 2b), de sortie du moule central (3), de fermeture des moules extérieurs (2a, 2b) l'un par rapport à l'autre et d'ouverture des moules extérieurs (2a, 2b) pour le prélèvement du produit (13).

6. Procédé selon l'une quelconque des revendications 1 à 5, **caractérisé en ce**, après l'introduction de la partie d'insertion (8b), il est obtenu un nouvel équipement du support de composant (5a, 5b, 5c) ou d'un autre support de composant (5a, 5b, 5c) sur le moule central (3) avec au moins une partie incorporée (7a, 7c) à placer à l'intérieur du produit (13), le placement de cette partie incorporée (7a, 7c) s'effectuant après l'application des ébauches (10) contre le contour de la cavité de moulage.

7. Procédé selon l'une quelconque des revendications 5 ou 6, **caractérisé en ce que** le cycle de mouvement de l'outil (1) comporte également les étapes de nouvelle sortie du moule central (3) après le placement de la partie d'insertion (8b) pour l'équipement d'un support de composant (5a, 5b, 5c) avec une partie incorporée (7a, 7c) et de nouvelle introduction du moule central (3) entre les moules extérieurs (2a, 2b).

8. Procédé selon l'une quelconque des revendications 1 à 5, **caractérisé en ce que**, en une première étape du procédé, plusieurs supports de composant (5a, 5b, 5c) sont équipés avec au moins une partie d'insertion (8b) à introduire dans le moule et avec au moins une partie incorporée (7a, 7b) à introduire dans le produit (13), la partie d'insertion (8b) étant placée avant l'introduction des ébauches (10) et la partie incorporée (7a, 7c) après l'application des ébauches (10) contre la paroi du moule.
